# FASCICULE DE BREVET EUROPEEN

(11) **EP 1 038 428 B1**
(45) Date de publication et mention de la délivrance du brevet: **07.07.2004**
(21) Numéro de dépôt: 00440064.4
(22) Date de dépôt: 03.03.2000
(51) Int. Cl.: A01D 34/66

(54) **Dispositif de coupe d'une machine de coupe**
Schneidevorrichtung einer Mähmaschine
Cutting device of a mowing machine

(30) Priorité: 24.03.1999 FR 9903775
(43) Date de publication de la demande: 27.09.2000
(73) Titulaire: KUHN S.A., 67706 Saverne Cedex (FR)
(72) Inventeur: Ermacora, Rino, 67700 St Jean Saverne (FR); Wattron, Bernard, 67700 Haegen (FR); Walch, Martin, 67490 Dettwiller (FR)

(56) Documents cités:
- EP-A- 0 245 186
- DE-A- 2 816 144
- FR-A- 2 759 533
- FR-E- 89 970
- GB-A- 2 089 634
- US-A- 2 625 784

## Description

La présente invention se rapporte à un dispositif de coupe d'une machine de coupe comportant :
- un entraîneur destiné à être entraîné par un arbre d'entraînement,
- au moins un support de coupe supportant au moins un élément de coupe,
- une structure support solidaire de l'entraîneur,
- au moins un dispositif d'entraînement destiné à entraîner du produit coupé vers l'arrière de la machine de coupe.

Il est connu dans l'état de la technique un tel dispositif de coupe équipant une machine de coupe.

Cette machine de coupe comporte un mécanisme de coupe comprenant une pluralité de dispositifs de coupe agencés suivant une ligne qui s'étend transversalement à la direction d'avance au travail.

Chaque dispositif de coupe comporte dans les grandes lignes un arbre d'entraînement entraîné en rotation autour d'un axe de révolution s'étendant vers le haut, un entraîneur fixé audit arbre d'entraînement et une structure support soudée audit entraîneur. A la structure support est soudé un dispositif d'entraînement qui entraîne un produit coupé vers l'arrière de la machine de coupe lorsque l'arbre d'entraînement est animé en rotation. Au dispositif d'entraînement sont fixés deux supports de coupe supportant chacun un élément de coupe destiné à couper un produit sur pied. L'entraîneur, la structure support et le dispositif d'entraînement forment un ensemble qui est fixé à l'arbre d'entraînement au moyen dudit entraîneur, lequel entraîneur est situé entre deux montages de roulements, ce qui rend le démontage dudit ensemble difficile et pénible. Un tel démontage de cet ensemble est nécessaire, notamment lorsque l'on souhaite remplacer le dispositif d'entraînement suite à une usure causée par un contact répété avec le produit coupé ou suite à une détérioration due à des projections de pierres par exemple.

Un autre inconvénient réside dans le fait que l'entraîneur, la structure support et ledit dispositif d'entraînement forment un ensemble indissociable. Par conséquent, l'endommagement seul du dispositif d'entraînement implique également le remplacement de l'entraîneur et de la structure support.

Le but de la présente invention est de remédier aux inconvénients décrits ci-dessus de manière à permettre un démontage facile et rapide, notamment du dispositif d'entraînement, tout en cherchant à obtenir une solution simple et peu onéreuse.

A cet effet, le dispositif de coupe est caractérisé en ce que le dispositif d'entraînement comporte au moins deux parois d'entraînement qui s'étendent sensiblement tout autour de la structure support et qui sont fixées de manière amovible à ladite structure support au moyen d'éléments d'assemblage.

L'invention concerne également les caractéristiques suivantes considérées isolément ou dans toutes leurs combinaisons techniquement possibles :
- la structure support est fixée de manière amovible à l'une de ses extrémités à l'entraîneur au moyen d'éléments d'assemblage ;
- le dispositif de coupe comporte un support supérieur destiné à être lié à un organe de la machine de coupe, et auquel est liée la structure support de manière amovible au moyen d'éléments d'assemblage ;
- le support supérieur comporte une première partie destinée à être liée audit organe de la machine de coupe, et une deuxième partie liée à ladite première partie au moyen d'une liaison du type pivot, la structure support étant liée de manière amovible à ladite deuxième partie dudit support supérieur au moyen desdits éléments d'assemblage ;
- la première partie du support supérieur est liée directement ou indirectement audit organe de la machine de coupe au moyen d'une liaison élastique qui permet avantageusement de filtrer tout ou partie des vibrations entre ledit organe de ladite machine de coupe et ladite première partie dudit support supérieur ;
- les parois d'entraînement s'étendent sensiblement verticalement entre le support supérieur et le (les) support(s) de coupe ;
- les parois d'entraînement prennent appui contre la structure support et forment chacune, en vue de dessus, au moins sensiblement une portion de surface de révolution ;
- chaque paroi d'entraînement comporte deux extrémités latérales s'étendant vers le haut et lesdites parois d'entraînement se chevauchent au niveau de leurs extrémités latérales ;
- les parois d'entraînement sont au moins sensiblement identiques, ce qui permet avantageusement de simplifier leur fabrication et donc de limiter leur coût de fabrication ;
- le dispositif d'entraînement comporte en sus au moins deux organes d'entraînement fixés à la structure support au moyen d'éléments d'assemblage ;
- le nombre d'organes d'entraînement est identique au nombre de parois d'entraînement, et chacun desdits organes d'entraînement s'étend vers le haut aux alentours des extrémités latérales correspondantes des parois d'entraînement ;
- les organes d'entraînement sont en appui sur les parois d'entraînement correspondantes et permettent de fixer lesdites parois d'entraînement à la structure support au moyen des éléments d'assemblage correspondants ;
- chaque paroi d'entraînement comporte une rainure dans laquelle est logée une partie de l'organe d'entraînement correspondant, ce qui permet avantageusement d'éviter que du produit coupé par les éléments de coupe ne s'accumule entre ladite paroi d'entraînement et ledit organe d'entraînement ;
- le dispositif de coupe comporte un boîtier au moyen duquel il est fixé sur un mécanisme d'entraînement au moyen d'éléments d'assemblage ;
- l'entraîneur comporte au moins un orifice d'accès destiné à autoriser l'accès aux éléments d'assemblage qui fixent le boîtier au mécanisme d'entraînement ;
- le (chaque) support de coupe est fixé à l'entraîneur de manière amovible au moyen d'éléments d'assemblage ;
- le dispositif de coupe comporte deux supports de coupe situés radialement l'un en face de l'autre ;
- les éléments d'assemblage sont composés de vis ou de boulons.

L'invention concerne également une machine de coupe comportant un mécanisme d'entraînement et au moins un dispositif de coupe, ledit dispositif de coupe comportant une ou plusieurs des caractéristiques ci-dessus.

D'autres objets, caractéristiques et avantages de l'invention apparaissent dans la description suivante avec références aux dessins annexés qui représentent, à titre d'exemples non limitatifs, quelques formes de réalisation du dispositif de coupe.

Sur ces dessins :
- la figure 1 représente une vue de dessus d'une machine de coupe équipée de dispositifs de coupe selon l'invention, et sur laquelle ont été effectuées quelques coupes partielles ;
- la figure 2 représente, à une autre échelle, une vue de côté, en coupe suivant le plan de coupe I-I défini sur la figure 1, d'un dispositif de coupe lié à la machine de coupe de la figure 1 selon une première forme de réalisation ;
- la figure 3 représente une vue de dessus du dispositif de coupe suivant le plan de coupe III-III défini sur la figure 2 ;
- la figure 4 représente, à une autre échelle, une vue partielle du dispositif de coupe suivant le plan de coupe IV-IV défini sur la figure 3 ;
- la figure 5 représente, à une autre échelle, une vue de côté, en coupe, d'un dispositif de coupe lié à la machine de coupe de la figure 1, selon une deuxième forme de réalisation.

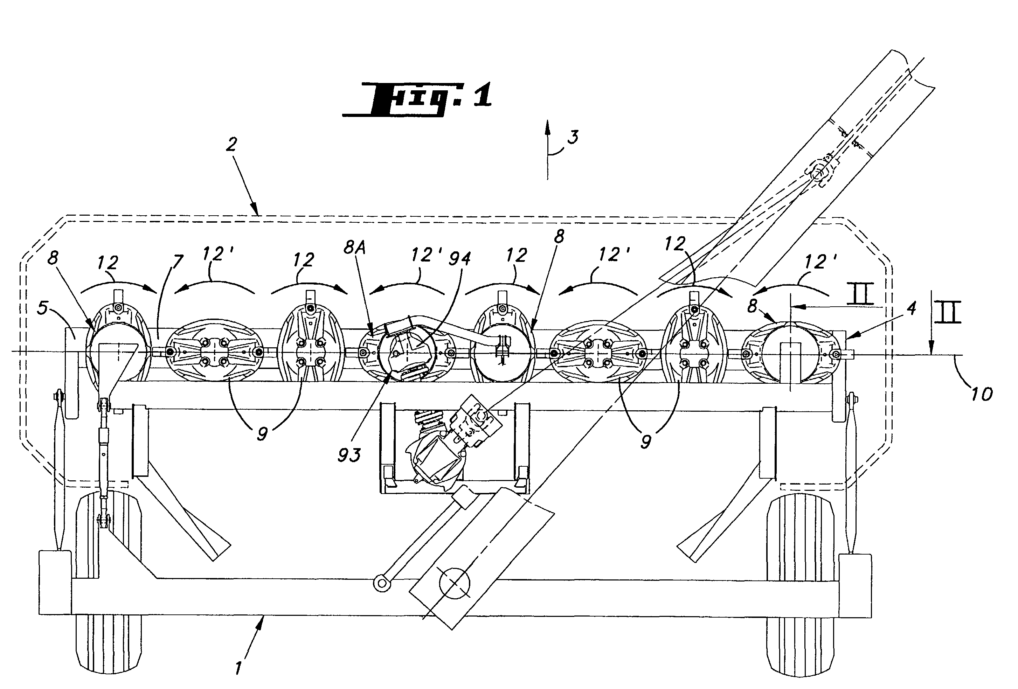

La machine de coupe (1) représentée sur la figure 1 est, selon l'exemple de réalisation représenté, une faucheuse (2) du type traînée destinée à être attelée à un véhicule moteur (non représenté) qui, durant l'utilisation, la tire dans le sens d'avance (3). Cette faucheuse (2) est semblable à la faucheuse décrite par le document FR 2 759 533 déposé par la demanderesse, elle ne sera donc pas décrite dans tous les détails. Pour plus de précision, on se reportera, en cas de besoin, au texte dudit document.

Cette faucheuse (2) comporte un mécanisme de récolte (4) contenant lui-même un mécanisme de coupe (5) qui s'étend, lors du travail, sensiblement horizontalement et orthogonalement à la direction d'avance (3). Ce mécanisme de coupe (5) comporte un mécanisme d'entraînement (7), une pluralité de dispositifs de coupe (8 ; 8A) selon l'invention, et des organes de coupe (9). A la lumière de la figure 1, on voit que les organes de coupe (9) et les dispositifs de coupe (8 ; 8A) sont agencés suivant une ligne (10) qui s'étend sensiblement orthogonalement à la direction d'avance (3). Selon l'exemple de réalisation représenté, chaque organe de coupe (9) et chaque dispositif de coupe (8 ; 8A) est destiné à être animé en rotation suivant un sens de rotation (12, 12') respectif de manière que chaque organe de coupe (9) converge avec un dispositif de coupe (8 ; 8A) voisin tel que représenté sur la figure 1. A cet effet, le produit coupé par un dispositif de coupe (8 ; 8A) et un organe de coupe (9) qui convergent, est, lors du travail, entraîné entre ledit dispositif de coupe (8 ; 8A) et ledit organe de coupe (9) vers l'arrière de la faucheuse (2).

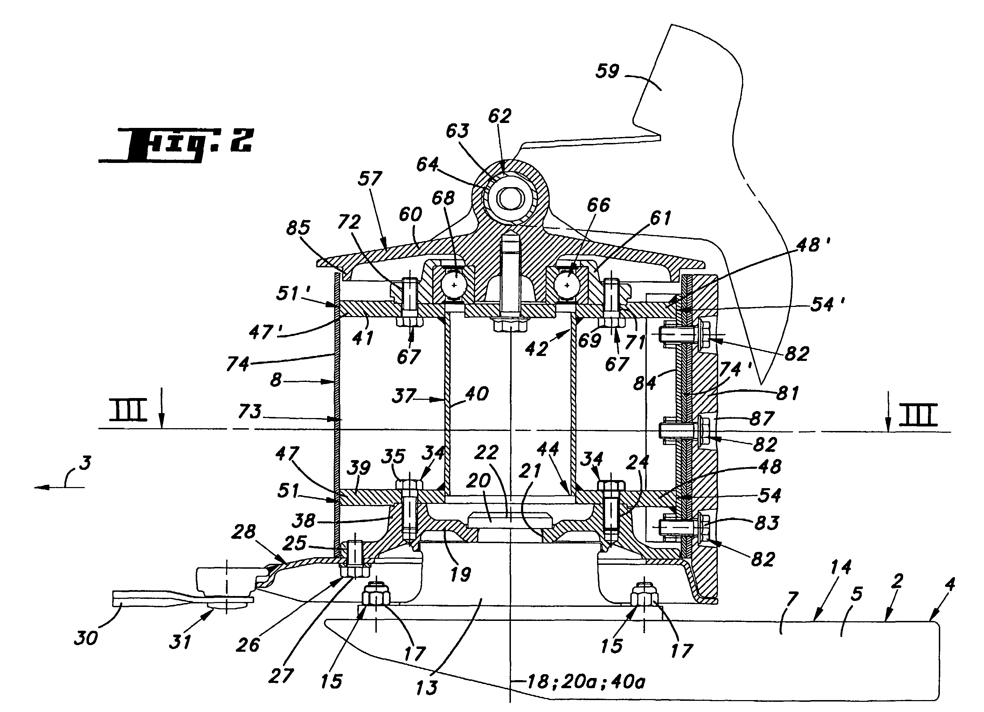

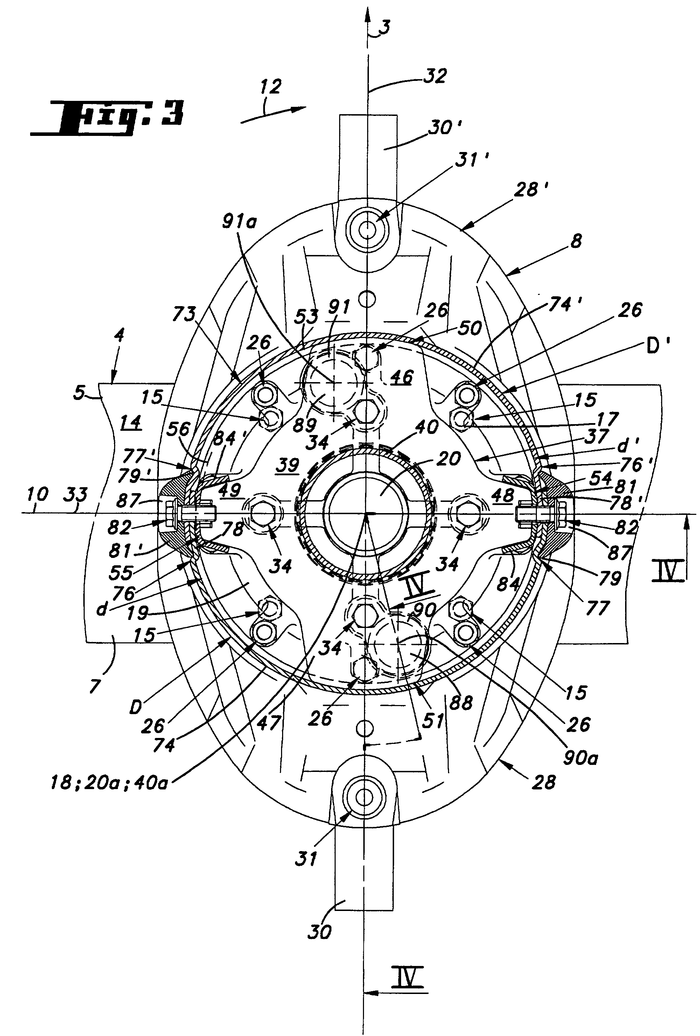

A la lumière des figures 2 et 3, on voit que chaque dispositif de coupe (8) comporte un boîtier (13) au moyen duquel il est fixé sur la partie supérieure (14) du mécanisme d'entraînement (7) à l'aide d'éléments d'assemblage (15). Selon l'exemple de réalisation représenté, ces éléments d'assemblage (15) sont composés de quatre boulons (17) qui s'étendent sensiblement verticalement et qui sont répartis au moins sensiblement régulièrement autour de l'axe central (18) du dispositif de coupe (8). Le dispositif de coupe (8) selon l'invention comporte également un entraîneur (19) qui est entraîné en rotation par un arbre d'entraînement (20) d'axe de rotation (20a) au moins sensiblement confondu avec l'axe central (18). Cet arbre d'entraînement (20) est, lors du travail, entraîné en rotation au moyen du mécanisme d'entraînement (7) autour de son axe de rotation (20a). On notera encore que cet arbre d'entraînement (20) est guidé en rotation dans le boîtier (13) au moyen d'une liaison du type pivot qui n'est pas représentée. Ledit mécanisme d'entraînement (7), étant largement connu par l'homme du métier, ne sera pas décrit davantage.

A la lumière des figures 2 et 3, on voit encore que l'entraîneur (19) est fixé à l'arbre d'entraînement (20), d'une part au moyen de cannelures (21) et d'autre part au moyen d'un épaulement (22) prévu sur ledit arbre d'entraînement (20) et d'un autre épaulement généré par la liaison du type pivot qui n'est pas représentée. Cet entraîneur (19) est de forme au moins sensiblement circulaire et comporte un certain nombre de taraudages (24, 25) qui sont répartis au moins sensiblement régulièrement autour de l'axe central (18) du dispositif de coupe (8).

On remarquera que les taraudages (25) sont au nombre de dix et que chacun d'eux est destiné à recevoir un élément d'assemblage (26) qui est, selon l'exemple de réalisation représenté, une vis (27) qui est vissée dans ledit taraudage (25). Ces vis (27) permettent de fixer de manière amovible deux supports de coupe (28, 28') à l'entraîneur (19). Plus précisément, on voit à la lumière des figures 2 et 3 que chaque support de coupe (28, 28') est fixé sous l'entraîneur (19) au moyen de cinq vis (27) correspondantes et que chaque support de coupe (28, 28') supporte un élément de coupe (30, 30') permettant de couper un produit lorsque l'entraîneur (19) est animé en rotation autour de l'axe de rotation (20a) de l'arbre d'entraînement (20). Ces deux supports de coupe (28, 28') sont sensiblement identiques et sont situés radialement l'un en face de l'autre de manière à ce que les éléments de coupe (30, 30') s'étendent vers l'extérieur en s'éloignant de l'axe de rotation (20a) par rapport à leur liaison (31, 31') qui les lie aux supports de coupe (28, 28') correspondants. On notera encore que les deux supports de coupe (28, 28') sont ensemble, selon une vue de dessus, de forme sensiblement ovale ou elliptique et sont sensiblement symétriques, d'une part par rapport à une droite de symétrie longitudinale (32) passant par les deux liaisons (31, 31') et l'axe central (18) et d'autre part, par rapport à une droite de symétrie transversale (33) sensiblement orthogonale à ladite droite de symétrie longitudinale (32) et passant également par l'axe central (18).

Les taraudages (24) sont, quant à eux, au nombre de quatre et chacun d'eux est destiné à recevoir un élément d'assemblage (34) qui est, selon l'exemple de réalisation représenté, une vis (35). Ces vis (35) permettent de fixer, de manière amovible, une structure support (37) à l'entraîneur (19). Plus précisément, on voit à la lumière des figures 2 et 3 que cette structure support (37) est fixée sur l'entraîneur (19) au moyen des vis (35). A cet effet, l'entraîneur (19) comporte quatre renflements (38) sur lesquels la structure support (37) est en appui. Cette structure support (37) comporte, selon l'exemple de réalisation représenté, un flasque inférieur (39), un tronc tubulaire (40) et un flasque supérieur (41). Le tronc tubulaire (40) a un axe géométrique longitudinal (40a) au moins sensiblement confondu avec l'axe central (18) du dispositif de coupe (8), et comporte une extrémité supérieure (42) aux alentours de laquelle est situé le flasque supérieur (41), et une extrémité inférieure (44) aux alentours de laquelle est situé le flasque inférieur (39). Chaque flasque (39, 41) s'étend, selon l'exemple de réalisation représenté, sensiblement horizontalement et, est en forme d'étoile. Chaque flasque (39, 41) comporte deux bandes larges (46, 47, 46', 47') et deux bandes étroites (48, 49, 48', 49'). Les deux bandes larges (46, 47, 46', 47') comportent chacune une extrémité extérieure (50, 51, 50', 51') arrondie suivant un premier cercle (53) centré sur l'axe géométrique longitudinal (40a). Les deux bandes étroites (48, 49, 48', 49') comportent, quant à elles, chacune une extrémité extérieure (54, 55, 54', 55') arrondies suivant un deuxième cercle (56) également centré sur l'axe géométrique longitudinal (40a).

A la lumière des différentes figures, on voit en outre que le dispositif de coupe (8) comporte un support supérieur (57) qui est lié, d'une part, à une structure porteuse (59) faisant partie du mécanisme de récolte (4), et d'autre part à la structure support (37). La figure 2 montre de manière plus précise que ce support supérieur (57) comporte une première partie (60) et une deuxième partie (61). Cette première partie (60) est liée à la structure porteuse (59) du mécanisme de récolte (4) au moyen d'une liaison élastique (62) qui est, selon l'exemple de réalisation représenté, composée d'une bague élastique (63) comportant elle-même un élément flexible composé d'un élément en caoutchouc (64). Cette liaison élastique (62) empêche avantageusement la transmission de tout ou partie des vibrations entre le dispositif de coupe (8) et la structure porteuse (59).

La deuxième partie (61) est liée, quant à elle, d'une part à la première partie (60) au moyen d'une liaison (66) du type pivot et d'autre part de manière amovible au flasque supérieur (41) de ladite structure support (37) au moyen d'éléments d'assemblage (67). Selon l'exemple de réalisation représenté, on voit que cette liaison (66) du type pivot comporte un roulement (68) et que les éléments d'assemblage (67) sont composés de vis (69) traversant d'une part des trous (71) prévus dans le flasque supérieur (41) et étant vissées d'autre part dans des taraudages (72) prévus à cet effet dans la deuxième partie (61).

A la lumière des différentes figures, on voit en outre que le dispositif de coupe (8) comporte également un dispositif d'entraînement (73) destiné à entraîner du produit coupé vers l'arrière de la machine de coupe (1). Ce dispositif d'entraînement (73) comporte, selon l'exemple de réalisation représenté, deux parois d'entraînement (74, 74') qui s'étendent sensiblement verticalement entre la première partie (60) du support supérieur (57) et les supports de coupe (28, 28'). On notera encore que chaque paroi d'entraînement (74, 74') forme, en vue de dessus, au moins sensiblement une portion de surface de révolution qui est, selon l'exemple de réalisation représenté, formée d'un demi-cercle de diamètre extérieur (D, D').

A cet effet, on remarquera que les deux parois d'entraînement (74, 74') sont au moins sensiblement identiques et qu'elles s'étendent sensiblement tout autour de la structure support (37) et que chacune desdites parois d'entraînement (74, 74') comporte deux extrémités latérales (76. 76', 77, 77') qui s'étendent vers le haut.

Pour assurer une bonne étanchéité du dispositif de coupe (8) et éviter que du produit coupé ne pénètre à l'intérieur des parois d'entraînement (74, 74'), on remarquera que lesdites deux parois d'entraînement (74, 74') se chevauchent au niveau de leurs extrémités latérales (76, 76', 77, 77').

A cet effet, on voit à la lumière de la figure 3 que chaque paroi d'entraînement (74, 74') comporte à l'une de ses extrémités latérales (76. 76'), une partie étroite (78, 78') s'étendant au moins sensiblement verticalement vers le haut et de diamètre (d, d') qui est quelque peu inférieur au diamètre (D, D') décrit précédemment. A l'autre extrémité latérale (77, 77') de chaque paroi d'entraînement (74, 74') est prévue une rainure (79, 79') s'étendant au moins sensiblement verticalement vers le haut. Selon cet exemple de réalisation représenté, on voit à la lumière de la figure 3 que l'extrémité latérale (77, 77') chevauche la partie étroite (78, 78') correspondante en s'étendant au-dessus de cette dernière.

Le dispositif d'entraînement (73) comporte encore deux organes d'entraînement (81, 81') permettant de contribuer au transport du produit coupé vers l'arrière de la machine de coupe (1). Chaque organe d'entraînement (81, 81') s'étend vers le haut aux alentours des extrémités latérales (76, 76', 77, 77') correspondantes des parois d'entraînement (74, 74') et permet de fixer de manière amovible ces dernières à la structure support (37) au moyen d'éléments d'assemblage (82) correspondants.

A cet effet, les organes d'entraînement (81, 81') sont en appui sur les parois d'entraînement (74, 74') correspondantes au niveau de leurs extrémités latérales (76, 76', 77, 77') et lesdites parois d'entraînement (74, 74') prennent appui contre les branches (46, 46', 47, 47', 48, 48', 49, 49') des flasques (39, 41) de la structure support (37). Plus précisément, les éléments d'assemblage (82) sont composés de vis (83) traversant d'une part les organes d'entraînement (81, 81') et les extrémités (76, 76', 77, 77) des parois d'entraînement (74, 74') et étant vissées d'autre part dans un support taraudé (84, 84') correspondant faisant partie de la structure support (37).

Les supports taraudés (84, 84') sont, selon l'exemple de réalisation représenté, au nombre de deux et chacun d'entre eux s'étend sensiblement verticalement d'une branche étroite (48, 49, 48', 49') correspondantes à l'autre (48, 49, 48', 49') auxquelles lesdits supports taraudés (84, 84') sont fixés.

A la lumière de la figure 3, on voit en sus que chaque organe d'entraînement (81,81') est en forme d'une demi-lune et que l'une de ses extrémités est logée dans la rainure (79, 79') correspondante d'une paroi d'entraînement (74, 74') et que l'autre extrémité dudit organe d'entraînement (81,81') est située au niveau de la dénivellation crée par le changement de diamètre (D, D') en diamètre (d, d') de ladite paroi d'entraînement (74, 74') correspondante. Un tel agencement des organes d'entraînement (81, 81') avec les parois d'entraînement (74, 74') permet avantageusement d'éviter que du produit coupé vienne se prendre entre lesdits organes d'entraînement (81, 81') et lesdites parois d'entraînement (74, 74') et permet en sus d'assurer une bonne étanchéité entre ces derniers.

A la lumière de la figure 2, on voit encore que les parois d'entraînement (74, 74') s'étendent relativement près de la première partie (60) du support supérieur (57) et que ladite première partie (60) comporte un renflement circulaire (85) qui s'étend vers le bas et qui est situé à l'intérieur desdites parois d'entraînement (74, 74') et très près de ces dernières. Un tel agencement de la première partie (60) du support supérieur (57) et des parois d'entraînement (74, 74') permet avantageusement de créer une sorte de chicane de manière à générer des obstacles au produit coupé qui aurait tendance à vouloir pénétrer à l'intérieur du dispositif de coupe (8).

Les parois d'entraînement (74, 74') s'étendent également relativement près des supports de coupe (28, 28') et de l'entraîneur (19) ce qui permet également de créer une sorte de chicane de manière à générer des obstacles au produit coupé qui aurait tendance à vouloir pénétrer à l'intérieur du dispositif de coupe (8).

A la lumière de la figure 2, on voit encore que chaque vis (83) s'étend sensiblement orthogonalement à l'axe central (18) du dispositif de coupe (8) et que la tête de chaque vis (83) est logée dans un évidement (87) respectif prévu dans les organes d'entraînement (81, 81'), ce qui permet avantageusement de mettre ladite tête de vis (83) à l'abri du flux du produit coupé, et éviter ainsi une usure de ladite tête ce qui compliquerait le démontage de celle-ci.

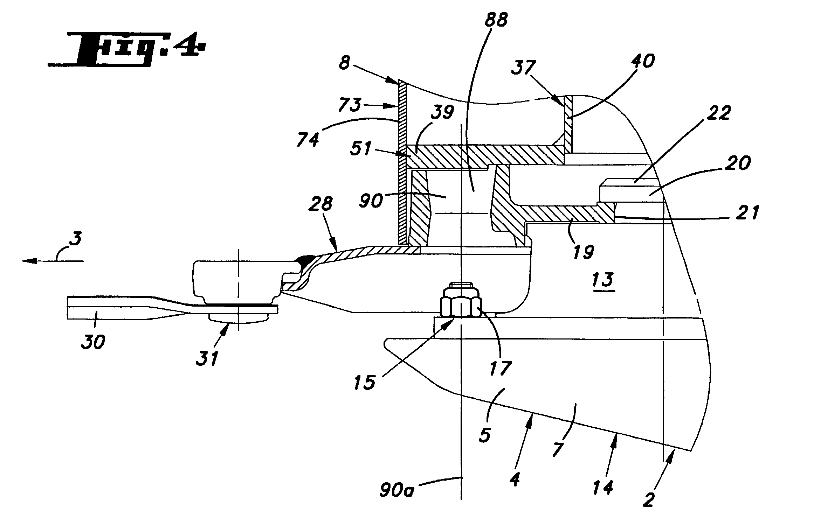

A la lumière des figures 3 et 4, on voit que l'entraîneur (19) comporte en outre deux orifices d'accès (88, 89) destinés à autoriser l'accès aux éléments d'assemblage (15), plus précisément aux boulons (17). Un tel orifice d'accès (88, 89) est, selon l'exemple de réalisation représenté, formé d'un trou circulaire (90, 91) d'axe longitudinal (90a, 91a) dirigé vers le haut et permet avantageusement d'accéder aux boulons (17) par le haut avec un outillage de démontage, ce qui facilite considérablement les opérations de montage et de démontage. On notera que, lorsque la structure support (37) est fixée à l'entraîneur (19), comme décrit précédemment, le flasque inférieur (39) obture le haut des deux trous circulaires (90, 91) de sorte à interdire à du produit coupé ou semblable de pénétrer à l'intérieur du dispositif de coupe (8).

On notera que dans l'ensemble le dispositif de coupe (8) est étanche au produit coupé, de sorte à interdire à ce dernier de pénétrer à l'intérieur des parois d'entraînement (74, 74').

Pour démonter ce dispositif de coupe (8) selon cette première forme de réalisation, l'opérateur procède de la manière suivante.

Dans un premier temps, l'opérateur démonte les vis (83) ce qui permet de déposer les deux organes d'entraînement (81, 81') ainsi que les deux parois d'entraînement (74, 74'). Ainsi en démontant les vis (83), l'opérateur peut rapidement déposer les éléments extérieurs qui sont en contact avec le produit coupé et qui risquent donc de subir une usure importante ou même d'être endommagés.

On notera que l'opérateur a également la possibilité de déposer à tout instant d'une part les supports de coupe (28, 28') en démontant les vis (27) et d'autre part les éléments de coupe (30, 30') en démontant la liaison (31, 31') en vue de leur remplacement par exemple.

Après avoir déposé les parois d'entraînement (74, 74') l'opérateur a accès aux vis (35) et aux vis (69) et en démontant ces vis (35, 69), l'opérateur peut déposer la structure support (37) en écartant quelque peu le mécanisme d'entraînement vers le bas et/ou en écartant quelque peu le support supérieur (57) vers le haut.

Lorsque la structure support (37) est déposée. l'opérateur peut ensuite soit déposer le support supérieur (57), soit déposer l'ensemble composé du boîtier (13) et de l'arbre d'entraînement (20) et de l'entraîneur (19).

Pour déposer le support supérieur (57), l'opérateur démonte simplement la liaison élastique (62) qui lie ledit support supérieur (57) à la structure porteuse (59) du mécanisme de récolte (4). A ce stade de démontage, l'opérateur a également la possibilité de déposer la deuxième partie (61) du support supérieur (57) pour intervenir au niveau du roulement (68).

Pour déposer l'ensemble composé du boîtier (13), de l'arbre d'entraînement (20) et de l'entraîneur (19), l'opérateur tourne l'entraîneur (19) autour de l'axe central (18) jusqu'à ce que l'un des orifices d'accès (88, 89) s'étende au-dessus d'un boulon (17), ce qui permet à l'opérateur de démonter ce dernier par le haut. Après avoir démonté ainsi l'ensemble des boulons (17), l'opérateur peut retirer le boîtier (13) du mécanisme d'entraînement (7).

Pour remonter ce dispositif de coupe (8), l'opérateur procède de la manière inverse à celle décrite ci-dessus.

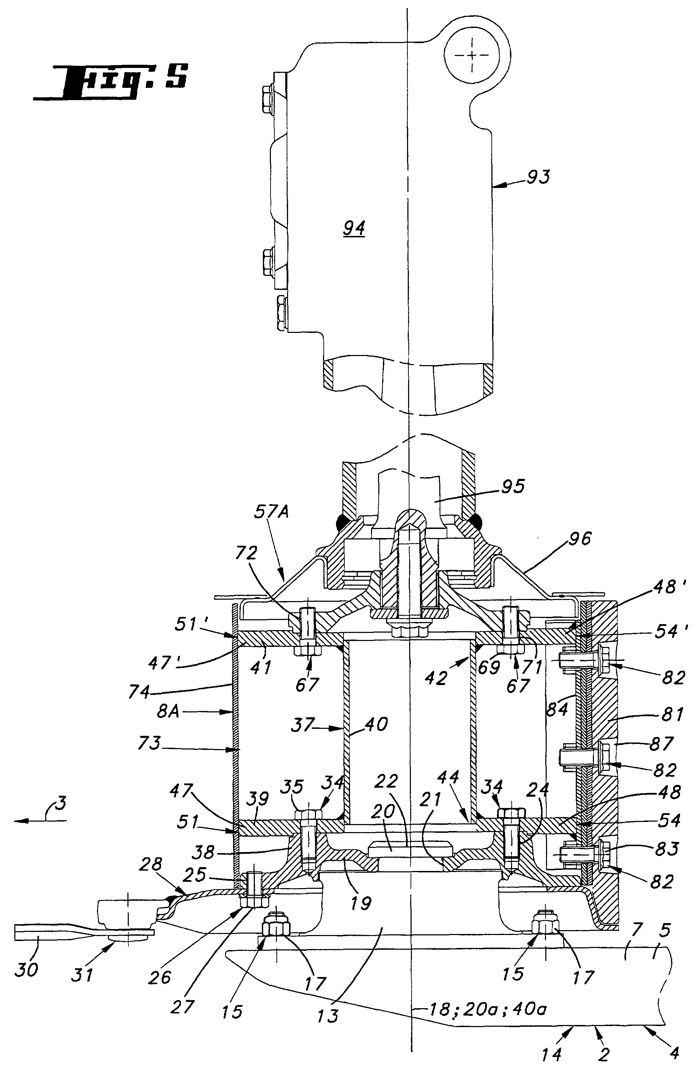

La figure 5 représente une vue de côté en coupe d'un dispositif de coupe (8A) selon une deuxième forme de réalisation. Ce dispositif de coupe (8A) comporte un certain nombre d'éléments qui ont été décrit précédemment. Ces éléments garderont par conséquent le même numéro de repère et ne seront pas redécrits. Il comporte également un certain nombre d'éléments qui sont comparables à des éléments du dispositif de coupe (8) suivi de la lettre A. Ils ne seront décrits que si cela s'avère nécessaire.

Le deuxième exemple de réalisation du dispositif de coupe (8) est dans l'ensemble très semblable au dispositif de coupe (8) décrit précédemment. Il convient de noter que la principale différence de ce dispositif de coupe (8A) par rapport au dispositif de coupe (8) décrit précédemment, réside dans le fait que la structure support (37) est animée en rotation autour de l'axe central (18) au moyen d'un dispositif de transmission (93).

Ce dispositif de transmission (93) est lui-même entraîné par une source mécanique extérieure et comporte, selon ce deuxième exemple de réalisation représenté, un carter d'entraînement (94) qui est situé sensiblement au-dessus du dispositif de coupe (8A). On notera que c'est à travers ce dispositif de coupe (8A) que le mécanisme d'entraînement (7) est destiné à être animé. Le mouvement arrive donc dans le mécanisme d'entraînement (7) au travers de l'arbre d'entraînement (20) du dispositif de coupe (8A) et ressort par les différents arbres d'entraînement (non représentés) des organes de coupe (9) et par les arbres d'entraînement (20) des dispositifs de coupe (8).

Selon ce deuxième exemple de réalisation représenté, on notera que ce dispositif de transmission (93) comporte un arbre d'entraînement supplémentaire (95) qui s'étend à l'intérieur du carter d'entraînement (94) et qui est fixé au flasque supérieur (41) de la structure support (37) au moyen des vis (69).

On remarquera encore que le support supérieur (57A) ne comporte, selon ce deuxième exemple de réalisation représenté, plus qu'une partie unique (96) qui est fixée au carter d'entraînement (94) et qui assure les mêmes fonctions d'étanchéité que la première partie (60) du support supérieur (57) décrit précédemment.

Le démontage et le remontage selon ce deuxième exemple de réalisation représenté est dans l'ensemble semblable au démontage et au remontage du dispositif de coupe (8) selon la première forme de réalisation.

Finalement diverses modifications peuvent être apportées aux exemples qui viennent d'être décrits, notamment en ce qui concerne la constitution des divers éléments ou par substitution d'équivalents techniques, sans pour autant sortir du domaine de protection.

Ainsi, il est par exemple parfaitement possible de remplacer les deux organes d'entraînement (81, 81') par une forme particulière des parois d'entraînement qui remplissent les mêmes fonctions que lesdits organes d'entraînement (81, 81'). Pour ce faire, les vis (83) peuvent prendre directement appui sur les parois d'entraînement de forme particulière pour fixer ces derniers à la structure support (37).

## Revendications

1. Dispositif de coupe d'une machine de coupe comportant :
- un entraîneur (19) destiné à être entraîné par un arbre d'entraînement (20, 95),
- au moins un support de coupe (28, 28') supportant au moins un élément de coupe (30, 30'),
- une structure support (37) solidaire de l'entraîneur (19),
- au moins un dispositif d'entraînement (73) destiné à entraîner du produit coupé vers l'arrière de la machine de coupe,
***caractérisé en ce* que** le dispositif d'entraînement (73) comporte au moins deux parois d'entraînement (74. 74') qui s'étendent sensiblement tout autour de la structure support (37) et qui sont fixées de manière amovible à ladite structure support (37) au moyen d'éléments d'assemblage (82).

2. Dispositif de coupe d'une machine de coupe selon la revendication 1, ***caractérisé en ce* que** la structure support (37) est fixée de manière amovible à l'une de ses extrémités à l'entraîneur (19) au moyen d'éléments d'assemblage (34).

3. Dispositif de coupe d'une machine de coupe selon la revendication 1 ou 2, ***caractérisé en ce* qu'**il comporte un support supérieur (57, 57A) destiné à être lié à un organe de la machine de coupe et auquel est liée la structure support (37) de manière amovible au moyen d'éléments d'assemblage (67).

4. Dispositif de coupe d'une machine de coupe selon la revendication 3, ***caractérisé en ce* que** le support supérieur (57) comporte une première partie (60) destinée à être liée audit organe de la machine de coupe et une deuxième partie (61) liée à ladite première partie (60) au moyen d'une liaison (66) du type pivot, la structure support (37) étant liée de manière amovible à ladite deuxième partie (61) dudit support supérieur (57) au moyen desdits éléments d'assemblage (67).

5. Dispositif de coupe d'une machine de coupe selon la revendication 4, ***caractérisé en ce* que** la première partie (60) du support supérieur (57) est destinée à être liée directement ou indirectement audit organe de la machine de coupe au moyen d'une liaison élastique (62).

6. Dispositif de coupe d'une machine de coupe selon l'une quelconque des revendications 3 à 5, ***caractérisé en ce* que** les parois d'entraînement (74, 74') s'étendent sensiblement verticalement entre le support supérieur (57) et le (les) support(s) de coupe (28, 28').

7. Dispositif de coupe d'une machine de coupe selon l'une quelconque des revendications 1 à 6, ***caractérisé en ce* que** les parois d'entraînement (74, 74') prennent appui contre la structure support (37) et forment chacune, en vue de dessus, au moins sensiblement une portion de surface de révolution.

8. Dispositif de coupe d'une machine de coupe selon l'une quelconque des revendications 1 à 7, ***caractérisé en ce* que** chaque paroi d'entraînement (74, 74') comporte deux extrémités latérales (76, 77, 76', 77') s'étendant vers le haut et que lesdites parois d'entraînement (74, 74') se chevauchent au niveau de leurs extrémités latérales (76, 77', 76', 77).

9. Dispositif de coupe d'une machine de coupe selon l'une quelconque des revendications 1 à 8, ***caractérisé en ce* que** les parois d'entraînement (74, 74') sont au moins sensiblement identiques.

10. Dispositif de coupe d'une machine de coupe selon l'une quelconque des revendications 1 à 9, ***caractérisé en ce* que** le dispositif d'entraînement (73) comporte en sus au moins deux organes d'entraînement (81, 81') fixés à la structure support (37) au moyen d'éléments d'assemblage (82).

11. Dispositif de coupe d'une machine de coupe selon la revendication 10 en combinaison avec la revendication 8 ou 9, ***caractérisé en ce* que** le nombre d'organes d'entraînement (81, 81') est identique au nombre de parois d'entraînement (74, 74') et que chacun desdits organes d'entraînement (81, 81') s'étend vers le haut aux alentours des extrémités latérales (76, 77, 76', 77') correspondantes des parois d'entraînement (74, 74').

12. Dispositif de coupe d'une machine de coupe selon la revendication 10 ou 11, ***caractérisé en ce* que** les organes d'entraînement (81, 81') sont en appui sur les parois d'entraînement (74, 74') correspondantes et permettent de fixer lesdites parois d'entraînement (74, 74') à la structure support (37) au moyen des éléments d'assemblage (82) correspondants.

13. Dispositif de coupe d'une machine de coupe selon la revendication 12, ***caractérisé en ce* que** chaque paroi d'entraînement (74, 74') comporte une rainure (79, 79') dans laquelle est logée une partie de l'organe d'entraînement (81, 81') correspondant.

14. Dispositif de coupe d'une machine de coupe selon l'une quelconque des revendications 1 à 13, ***caractérisé en ce* qu'**il comporte un boîtier (13) au moyen duquel il est destiné à être fixé sur un mécanisme d'entraînement (7) au moyen d'éléments d'assemblage (15).

15. Dispositif de coupe d'une machine de coupe selon la revendication 14, ***caractérisé en ce* que** l'entraîneur (19) comporte au moins un orifice d'accès (88, 89) destiné à autoriser l'accès aux éléments d'assemblage (15) destinés à fixer le boîtier (13) au mécanisme d'entraînement (7).

16. Dispositif de coupe d'une machine de coupe selon l'une quelconque des revendications 1 à 15, ***caractérisé en ce* que** le (chaque) support de coupe (28, 28') est fixé à l'entraîneur (19) de manière amovible au moyen d'éléments d'assemblage (26).

17. Dispositif de coupe d'une machine de coupe selon l'une quelconque des revendications 1 à 16, ***caractérisé en ce* qu'**il comporte deux supports de coupe (28, 28') situés radialement l'un en face de l'autre.

18. Dispositif de coupe d'une machine de coupe selon l'une quelconque des revendications 1 à 17, ***caractérisé en ce* que** les éléments d'assemblage (15, 26, 34, 67, 82) sont composés de vis (27, 35, 69, 83) ou de boulons (17).

19. Machine de coupe comportant un mécanisme d'entraînement (7) et au moins un dispositif de coupe (8 ; 8A), ***caractérisée en ce* que** le dispositif de coupe (8 ; 8A) est un dispositif de coupe selon l'une quelconque des revendications 1 à 18.

## Patentansprüche

1. Schneidvorrichtung einer Schneidmaschine, die
- einen Mitnehmer (19), der durch eine Antriebswelle (20, 95) angetrieben werden soll,
- mindestens einen Schneidträger (28, 28'), der mindestens ein Schneidelement (30, 30') trägt,
- eine fest mit dem Mitnehmer (19) verbundene Stützkonstruktion (37),
- mindestens eine Antriebsvorrichtung (73), die zum Mitnehmen des Schnittguts nach hinten der Schneidmaschine bestimmt ist,
umfasst, ***dadurch gekennzeichnet,* dass** die Antriebsvorrichtung (73) mindestens zwei Antriebswände (74, 74') aufweist, die sich im Wesentlichen ganz um die Stützkonstruktion (37) erstrecken und mittels Montageelementen (82) lösbar an der Stützkonstruktion (37) befestigt sind.

2. Schneidvorrichtung einer Schneidmaschine nach Anspruch 1, ***dadurch gekennzeichnet,* dass** die Stützkonstruktion (37) mit einem ihrer Enden mittels Montageelementen (34) lösbar am Mitnehmer (19) befestigt ist.

3. Schneidvorrichtung einer Schneidmaschine nach Anspruch 1 oder 2, ***dadurch gekennzeichnet,* dass** sie einen oberen Träger (57, 57A) aufweist, der mit einem Glied der Schneidmaschine verbunden werden soll und mit dem die Stützkonstruktion (37) mittels Montageelementen (67) lösbar verbunden ist.

4. Schneidvorrichtung einer Schneidmaschine nach Anspruch 3, ***dadurch gekennzeichnet,* dass** der obere Träger (57) einen ersten Teil (60), der mit dem Glied der Schneidmaschine verbunden werden soll, und einen zweiten Teil (61), der mittels einer Gelenkverbindung (66) mit dem ersten Teil (60) verbunden ist, aufweist, wobei die Stützkonstruktion (37) mittels Montageelementen (67) lösbar mit dem zweiten Teil (61) des oberen Trägers (57) verbunden ist.

5. Schneidvorrichtung einer Schneidmaschine nach Anspruch 4, ***dadurch gekennzeichnet,* dass** der erste Teil (60) des oberen Trägers (57) mittels einer elastischen Verbindung (62) direkt oder indirekt mit dem Glied der Schneidmaschine verbunden werden soll.

6. Schneidvorrichtung einer Schneidmaschine nach irgend einem der Ansprüche 3 bis 5, ***dadurch gekennzeichnet,* dass** sich die Antriebswände (74, 74') im Wesentlichen vertikal zwischen dem oberen Träger (57) und dem (den) Schneidträger(n) (28, 28') erstrecken.

7. Schneidvorrichtung einer Schneidmaschine nach irgend einem der Ansprüche 1 bis 6, ***dadurch gekennzeichnet,* dass** sich die Antriebswände (74, 74') an der Stützkonstruktion (37) abstützen und in Draufsicht jeweils zumindest im Wesentlichen einen Rotationsflächenteil bilden.

8. Schneidvorrichtung einer Schneidmaschine nach irgend einem der Ansprüche 1 bis 7, ***dadurch gekennzeichnet,* dass** jede Antriebswand (74, 74') zwei laterale Enden (76, 77, 76', 77') aufweist, die sich nach oben erstrecken, und dass sich die Antriebswände (74, 74') an ihren lateralen Enden (76, 77', 76', 77) überlappen.

9. Schneidvorrichtung einer Schneidmaschine nach irgend einem der Ansprüche 1 bis 8, ***dadurch gekennzeichnet,* dass** die Antriebswände (74, 74') zumindest im Wesentlichen identisch sind.

10. Schneidvorrichtung einer Schneidmaschine nach irgend einem der Ansprüche 1 bis 9, ***dadurch gekennzeichnet,* dass** die Antriebsvorrichtung (73) des Weiteren mindestens zwei Antriebsglieder (81, 81') aufweist, die mittels Montageelementen (82) an der Stützkonstruktion (37) befestigt sind.

11. Schneidvorrichtung einer Schneidmaschine nach Anspruch 10 in Kombination mit Anspruch 8 oder 9, ***dadurch gekennzeichnet,* dass** die Anzahl der Antriebsglieder (81, 81') mit der Anzahl der Antriebswände (74, 74') identisch ist und dass sich jedes der Antriebsglieder (81, 81') in der Umgebung der entsprechenden lateralen Enden (76, 77, 76', 77') der Antriebswände (74, 74') nach oben erstreckt.

12. Schneidvorrichtung einer Schneidmaschine nach Anspruch 10 oder 11, ***dadurch gekennzeichnet,* dass** sich die Antriebsglieder (81, 81') an den entsprechenden Antriebswänden (74, 74') abstützen und die Befestigung der Antriebswände (74, 74') an der Stützkonstruktion (37) mittels der entsprechenden Montageelemente (82) gestatten.

13. Schneidvorrichtung einer Schneidmaschine nach Anspruch 12, ***dadurch gekennzeichnet,* dass** jede Antriebswand (74, 74') eine Nut (79, 79') aufweist, in der ein Teil des entsprechenden Antriebsglieds (81, 81') untergebracht ist.

14. Schneidvorrichtung einer Schneidmaschine nach irgend einem der Ansprüche 1 bis 13, ***dadurch gekennzeichnet,* dass** sie ein Gehäuse (13) aufweist, mittels dessen sie mittels Montageelementen (15) an einem Antriebsmechanismus (7) befestigt werden soll.

15. Schneidvorrichtung einer Schneidmaschine nach Anspruch 14, ***dadurch gekennzeichnet,* dass** der Mitnehmer (19) mindestens eine Zugangsöffnung (88, 89) aufweist, die den Zugang zu für die Befestigung des Gehäuses (13) am Antriebsmechanismus (7) bestimmten Montageelementen (15) gestatten soll.

16. Schneidvorrichtung einer Schneidmaschine nach irgend einem der Ansprüche 1 bis 15, ***dadurch gekennzeichnet,* dass** der (jeder) Schneidträger (28, 28') mittels Montageelementen (26) lösbar am Mitnehmer (19) befestigt ist.

17. Schneidvorrichtung einer Schneidmaschine nach irgend einem der Ansprüche 1 bis 16, ***dadurch gekennzeichnet,* dass** sie zwei Schneidträger (28,28') aufweist, die sich radial gegenüber einander befinden.

18. Schneidvorrichtung einer Schneidmaschine nach irgend einem der Ansprüche 1 bis 17, ***dadurch gekennzeichnet,* dass** die Montageelemente (15, 26, 34, 67, 82) aus Schrauben (27, 35, 69, 83) oder Bolzen (17) bestehen.

19. Schneidmaschine mit einem Antriebsmechanismus (7) und mindestens einer Schneidvorrichtung (8; 8A), ***dadurch gekennzeichnet,* dass** die Schneidvorrichtung (8; 8A) eine Schneidvorrichtung nach irgend einem der Ansprüche 1 bis 18 ist.

## Claims

1. Cutting device of a cutting machines comprising:
- a driver (19) intended to be driven by a drive shaft (20, 95),
- at least one cutting support (28, 28') supporting at least one cutting element (30, 30'),
- a support structure (37) secured to the driver (19),
- at least one drive device (73) intended to drive cut product toward the rear of the cutting machine,
***characterized in* that** the drive device (73) includes at least two drive walls (74, 74') which extend substantially right around the support structure (37) and which are removably fastened to the said support structure (37) by means of assembly elements (82).

2. Cutting device of a cutting machine according to claim 1, ***characterized in* that** the support structure (37) is removably fastened at one of its ends to the driver (19) by means of assembly elements (34).

3. Cutting device of a cutting machine according to claim 1 or 2, ***characterized in* that** it comprises an upper support (57, 57A) intended to be connected to a member of the cutting machine and to which the support structure (37) is removably fastened by means of assembly elements (67).

4. Cutting device of a cutting machine according to claim 3, ***characterized in* that** the upper support (57) comprises a first part (60) intended to be connected to the said member of the cutting machine and a second part (61) connected to the said first part (60) by means of a connection (66) of the pivot type, the support structure (57) being removably connected to the said second part (61) of the said upper support (57) by means of the said assembly elements (67).

5. Cutting device of a cutting machine according to claim 4, ***characterized in* that** the first part (60) of the upper support (57) is intended to be directly or indirectly connected to the said member of the cutting machine by means of an elastic connection (62).

6. Cutting device of a cutting machine according to any one of claims 3 to 5, ***characterized in* that** the drive walls (74, 74') extend substantially vertically between the upper support (57) and the cutting support(s) (28, 28').

7. Cutting device of a cutting machine according to any one of claims 1 to 6, ***characterized in* that** the drive walls (74, 74') bear against the support structure (37) and each forms, when viewed from above, at least substantially a portion of a surface of revolution.

8. Cutting device of a cutting machine according to any one of claims 1 to 7, ***characterized in* that** each drive wall (74, 74') comprises two lateral ends (76, 77, 76', 77') extending upward and that the said drive walls (74, 74') overlap at their lateral ends (76, 77, 76', 77').

9. Cutting device of a cutting machine according to any one of claims 1 to 8, ***characterized in* that** the drive walls (74, 74') are at least substantially identical.

10. Cutting device of a cutting machine according to any one of claims 1 to 9, ***characterized in* that** the drive device (73) additionally comprises at least two drive members (81, 81') fastened to the support structure (37) by means of assembly elements (82).

11. Cutting device of a cutting machine according to claim 10 combined with claim 8 or 9, ***characterized in* that** the number of drive members (81, 81') is identical to the number of drive walls (74, 74') and that each of the said drive members (81, 81') extends upward in the vicinity of the corresponding lateral ends (76, 77, 76', 77') of the drive walls (74, 74').

12. Cutting device of a cutting machine according to claim 10 or 11, ***characterized in* that** the drive members (81, 81') bear against the corresponding drive walls (74, 74') and allow the said drive walls (74, 74') to be fastened to the support structure (37) by means of the corresponding assembly elements (82).

13. Cutting device of a cutting machine according to claim 12, ***characterized in* that** each drive wall (74, 74') comprises a groove (79, 79') in which one part of the corresponding drive member (81, 81') is housed.

14. Cutting device of a cutting machine according to any one of claims 1 to 13, ***characterized in* that** it comprises a casing (13) by means of which the said cutting device is intended to be fastened to a drive mechanism (7) by means of assembly elements (15).

15. Cutting device of a cutting machine according to claim 14, ***characterized in* that** the driver (19) comprises at least one access orifice (88, 89) intended to allow access to the assembly elements (15) intended to fasten the casing (13) to the drive mechanism (7).

16. Cutting device of a cutting machine according to any one of claims 1 to 15, ***characterized in* that** the (each) cutting support (28, 28') is removably fastened to the driver (19) by means of assembly elements (26).

17. Cutting device of a cutting machine according to any one of claims 1 to 16, ***characterized in* that** it comprises two cutting supports (28, 28') located radially facing each other.

18. Cutting device of a cutting machine according to any one of claims 1 to 17, ***characterized in* that** the assembly elements (15, 26, 34, 67, 82) are made up of screws (27, 35, 69, 83) or bolts (17).

19. Cutting machine comprising a drive mechanism (7) and at least one cutting device (8 ; 8A), ***characterized in* that** the cutting device (8 ; 8A) is a cutting device according to any one of claims 1 to 18.
